# EUROPEAN PATENT APPLICATION

(11) **EP 4 814 657 A1**
(43) Date of publication of application: **30.09.2026**
(21) Application number: 25224870.3
(22) Date of filing: 18.12.2025
(51) Int. Cl.: G06F 1/3203, G06F 1/324, G06F 1/3234, G06F 1/3287, G06F 1/3296

(54) **APPARATUS AND METHOD FOR FREQUENCY-AWARE INTELLIGENT POWER MANAGEMENT**

(30) Priority: 29.03.2025 US 202519094889
(71) Applicant: Intel Corporation, Santa Clara, CA 95054 (US)
(72) Inventor: Purandare, Adwait Avinash, Beaverton, 97006 (US); Bustan, Yuval, 40695 Moshav Mismeret (IL); Gandhi, Arpit Ashokkumar, Folsom, 95630 (US); Shor, Roi Menahem, 6963703 Tel Aviv (IL); Amsis, Rami, 7252716 Ramla, Center District (IL); Sistla, Krishnakanth V., Portland, 97229 (US); Shimko, Oleg, Portland, 97229 (US)
(74) Representative: Goddar, Heinz J.

(57) **Abstract**

Apparatus and method for frequency-aware intelligent power control. For example, an example processor comprises: a plurality of cores; power management circuitry to control power consumption of the plurality of cores in accordance with a first power control mode or a second power control mode, the power management circuitry to enter the second power control mode when a frequency of a core of the plurality of cores has dropped below a specified minimum frequency; the power management circuitry to control power consumption of the core in the first power control mode through regulation of voltages and frequencies of the core; and the power management circuitry to control power consumption in the second power control mode by reducing dynamic capacitance (C_{dyn}) associated with the core while the core operates at or below the specified minimum frequency.

## Description

### BACKGROUND

### Field of the Invention

The embodiments of the invention relate generally to the field of computer processors. More particularly, the embodiments relate to an apparatus and method for frequency-aware intelligent power management.

### Description of the Related Art

Core counts continue to increase in each new generation of processors while thermal design power (TDP) specifications remain relatively flat or are reduced to achieve lower operating costs, longer battery life, and/or platform power requirements. In some cases, the base frequency (the "guaranteed" frequency at the P1 performance state) of the processor may be reduced to achieve a particular TDP specification, potentially resulting in a P1 frequency inversion over the previous generation and, thus, reduced SKU marketability or SKU cancellation. Additionally, as P1 requirements become more aggressive, yields may drop below desired manufacturing limits as fewer processors are able to comply with TDP and base frequency requirements.

### BRIEF DESCRIPTION OF THE DRAWINGS

A better understanding of the present invention can be obtained from the following detailed description in conjunction with the following drawings, in which:
FIG. 1 illustrates an example computer system architecture.
FIG. 2 illustrates a processor comprising a plurality of cores.
FIG. 3A illustrates a plurality of stages of a processing pipeline.
FIG. 3B illustrates details of one embodiment of a core.
FIG. 4 illustrates execution circuitry in accordance with one embodiment.
FIG. 5 illustrates one embodiment of a register architecture.
FIG. 6 illustrates one example of an instruction format.
FIG. 7 illustrates addressing techniques in accordance with one embodiment.
FIG. 8 illustrates one embodiment of an instruction prefix.
FIGS. 9A-D illustrate embodiments of how the R, X, and B fields of the prefix are used.
FIGS. 10A-B illustrate examples of a second instruction prefix.
FIG. 11 illustrates payload bytes of one embodiment of an instruction prefix.
FIG. 12 illustrates instruction conversion and binary translation implementations.
FIG. 13 is a block diagram of a portion of a system in accordance with an embodiment of the present invention.

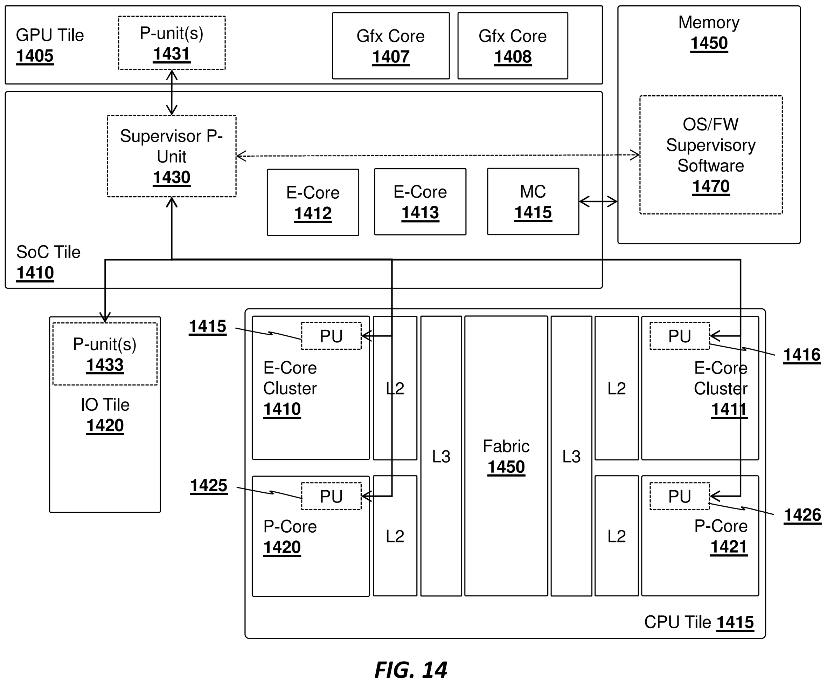

FIG. 14 illustrates a disaggregated tile-based architecture on which embodiments of the invention may be implemented.
FIG. 15 illustrates communication between power units in accordance with some embodiments.
FIG. 16 illustrates an arrangement of temperature sensors in accordance with some embodiments.
FIG. 17 illustrates an example architecture including an efficiency core cluster and a performance core cluster.

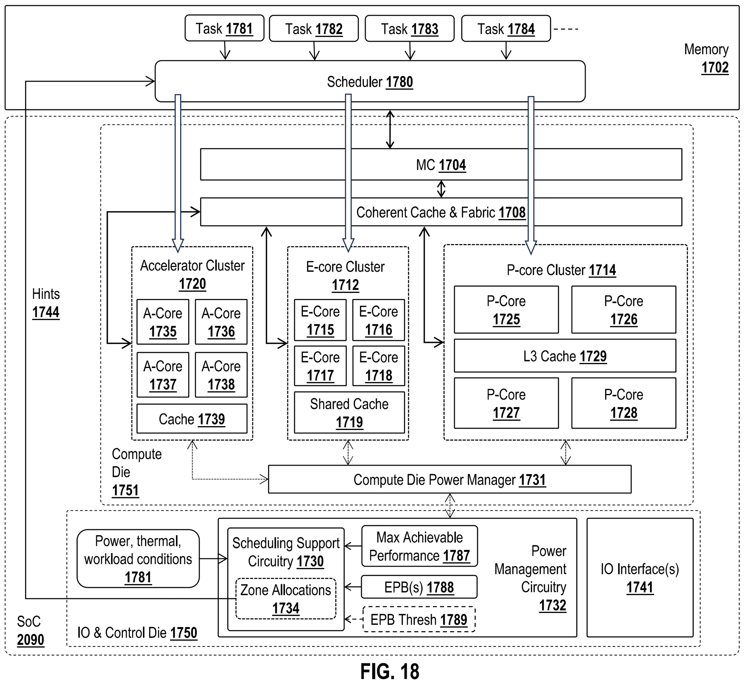

FIG. 18 illustrates another example architecture including an efficiency core cluster, a performance core cluster, and an accelerator cluster.
FIG. 19A illustrates power and voltage management in existing implementations.
FIG. 19B illustrates power and voltage management in accordance with embodiments of the invention.
FIG. 20 illustrates power management circuitry in accordance with embodiments of the invention.
FIG. 21 illustrates transitions between a dynamic capacitance control mode and a dynamic voltage and frequency scaling control mode.
FIG. 22 illustrates a dynamic capacitance control logic in accordance with embodiments of the invention.
FIG. 23 illustrates a plurality of operational steps corresponding to the dynamic capacitance control mode.
FIG. 24 illustrates a method in accordance with embodiments of the invention.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### Exemplary Computer Architectures

Detailed below are descriptions of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

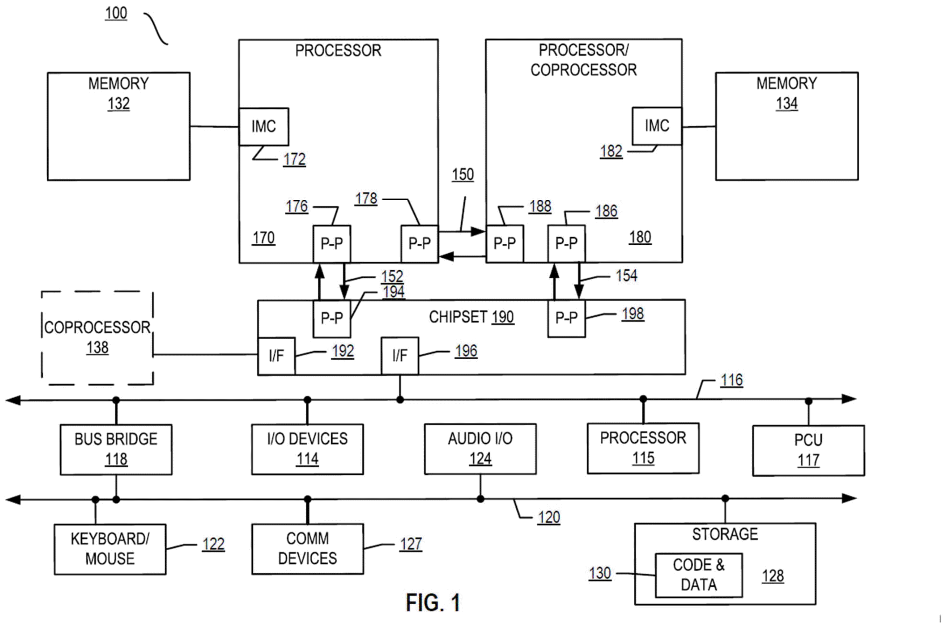

FIG. 1 illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multidrop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

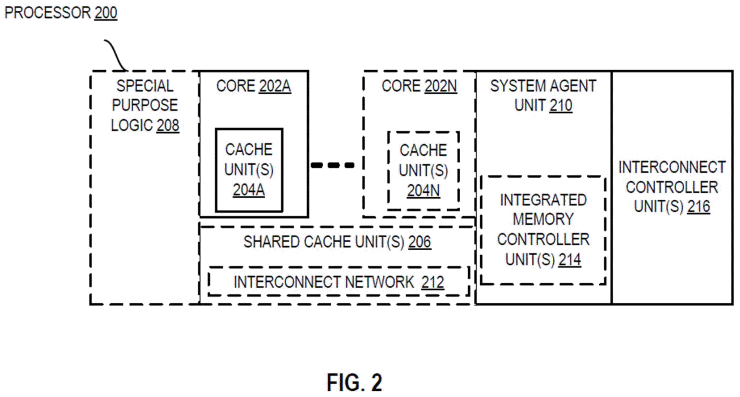

FIG. 2 illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of FIG. 1.

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

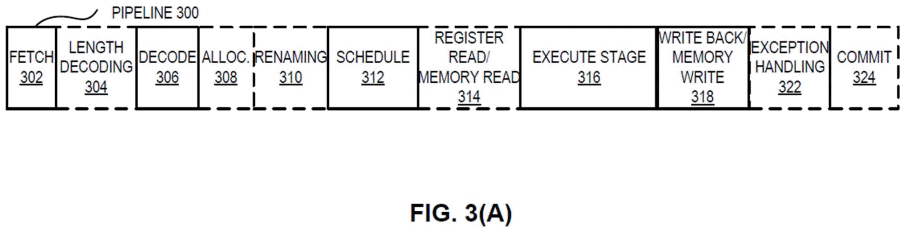

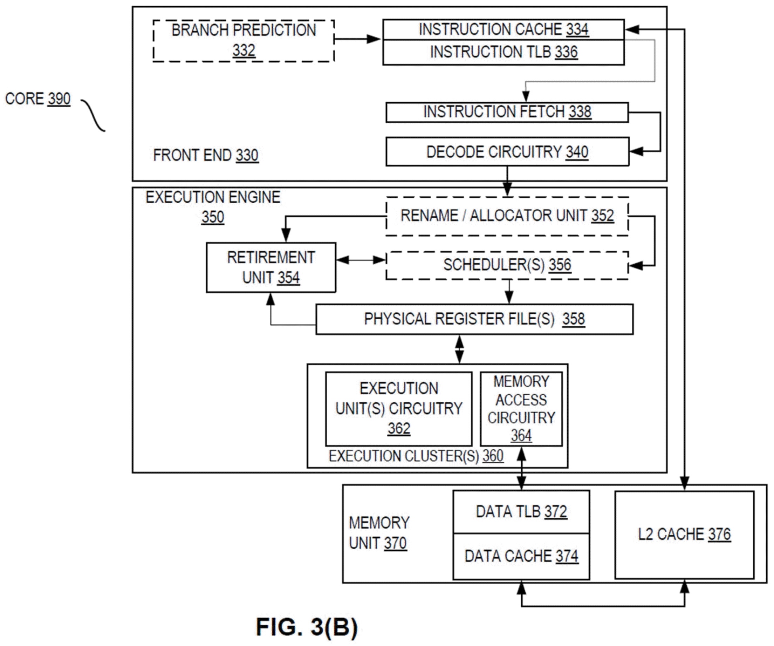

FIG. 3(A) is a block diagram illustrating both an exemplary in-order pipeline and an exemplary register renaming, out-of-order issue/execution pipeline according to embodiments of the invention. FIG. 3(B) is a block diagram illustrating both an exemplary embodiment of an in-order architecture core and an exemplary register renaming, out-of-order issue/execution architecture core to be included in a processor according to embodiments of the invention. The solid lined boxes in FIGS. 3(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 3(A), a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

FIG. 3(B) shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unit(s) Circuitry

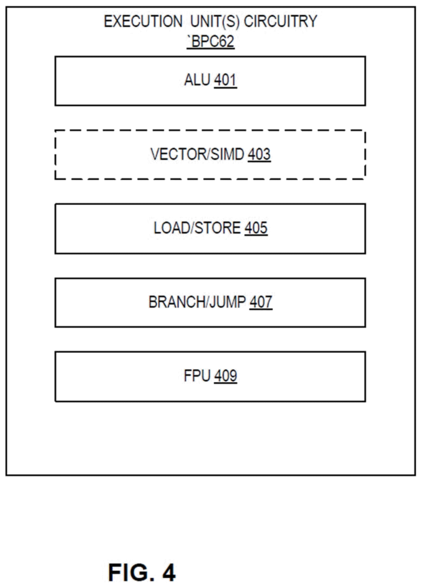

FIG. 4 illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

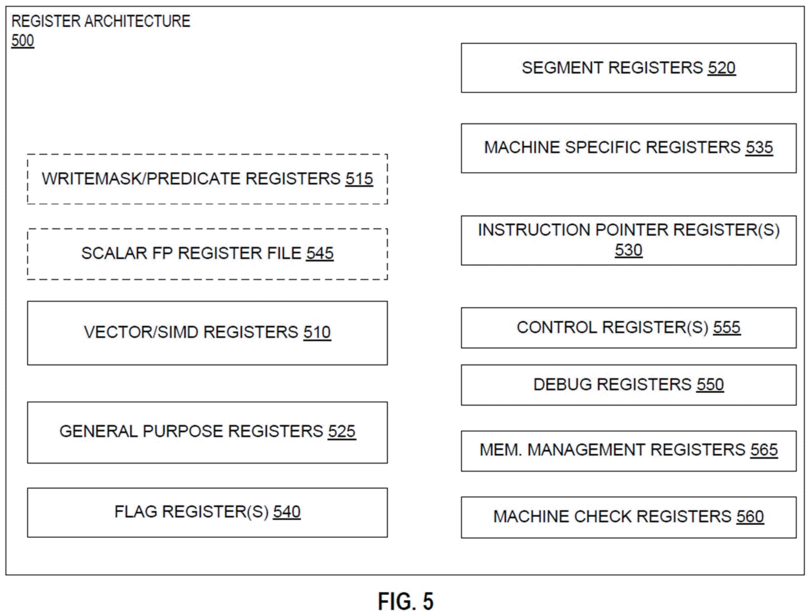

FIG. 5 is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

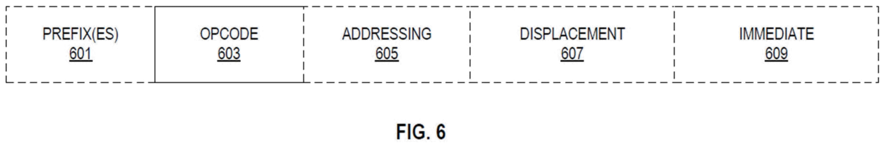

FIG. 6 illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

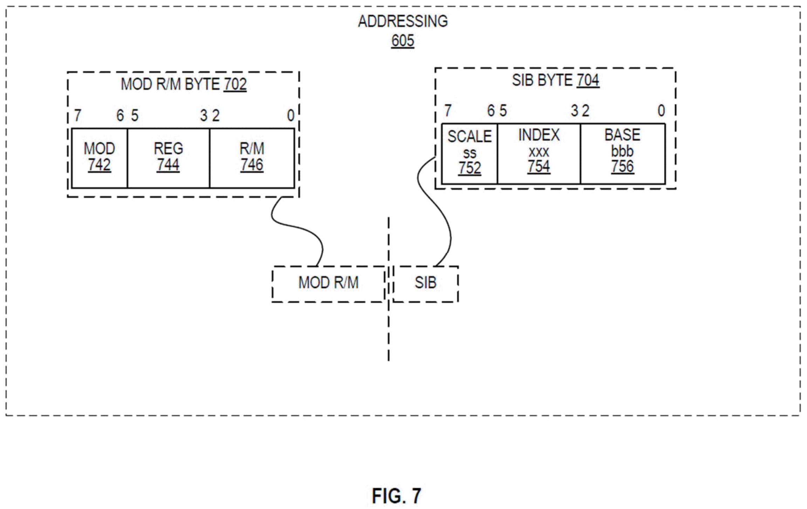

The addressing field 605 is used to address one or more operands of the instruction, such as a location in memory or one or more registers. FIG. 7 illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

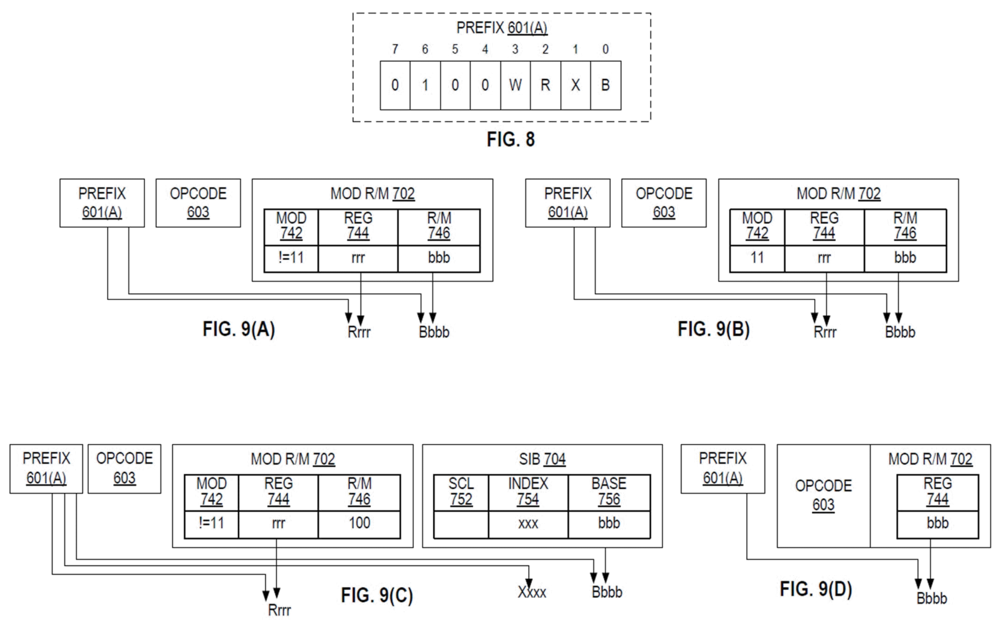

FIG. 8 illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

FIGS. 9(A)-(D) illustrate embodiments of how the R, X, and B fields of the first prefix 601(A) are used. FIG. 9(A) illustrates R and B from the first prefix 601(A) being used to extend the reg field 744 and R/M field 746 of the MOD R/M byte 702 when the SIB byte 7 04 is not used for memory addressing. FIG. 9(B) illustrates R and B from the first prefix 601(A) being used to extend the reg field 744 and R/M field 746 of the MOD R/M byte 702 when the SIB byte 7 04 is not used (register-register addressing). FIG. 9(C) illustrates R, X, and B from the first prefix 601(A) being used to extend the reg field 744 of the MOD R/M byte 702 and the index field 754 and base field 756 when the SIB byte 7 04 being used for memory addressing. FIG. 9(D) illustrates B from the first prefix 601(A) being used to extend the reg field 744 of the MOD R/M byte 702 when a register is encoded in the opcode 603.

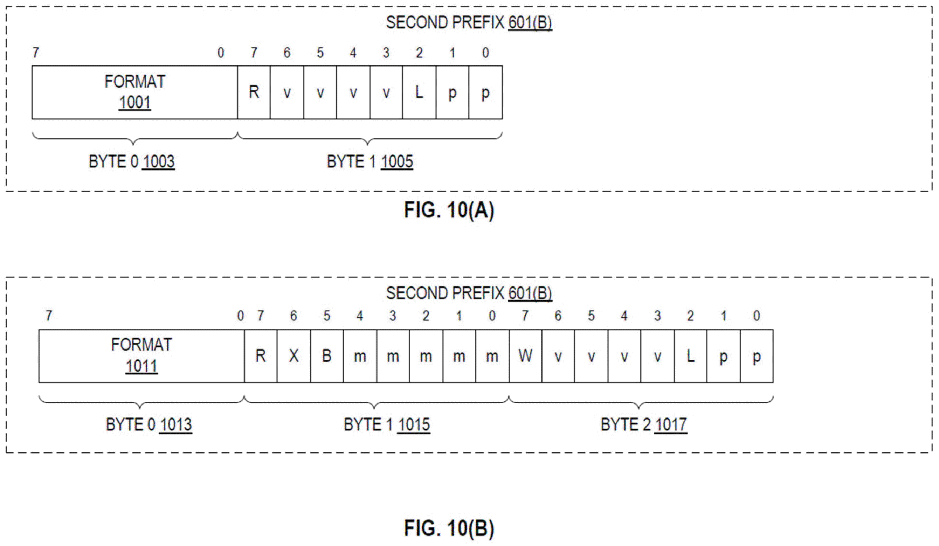

FIGS. 10(A)-(B) illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

FIG. 10(A) illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

FIG. 10(B) illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

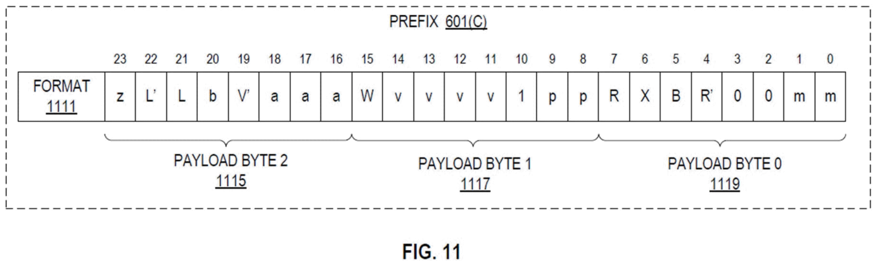

FIG. 11 illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 5) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to:1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | ModR/M reg | GPR, Vector | Destination or Source |
| VVVV | V' | VVVV | | GPR, Vector | 2nd Source or Destination |
| RM | X | B | ModR/M R/M | GPR, Vector | 1st Source or Destination |
| BASE | 0 | B | ModR/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | ModR/M reg | GPR, Vector | Destination or Source |
| VVVV | vvvv | GPR, Vector | 2^{nd} Source or Destination |
| RM | ModR/M R/M | GPR, Vector | 1^{st} Source or Destination |
| BASE | ModR/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | ModR/M Reg | k0-k7 | Source |
| VVVV | vvvv | k0-k7 | 2^{nd} Source |
| RM | ModR/M R/M | k0-7 | 1^{st} Source |
| {k1] | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

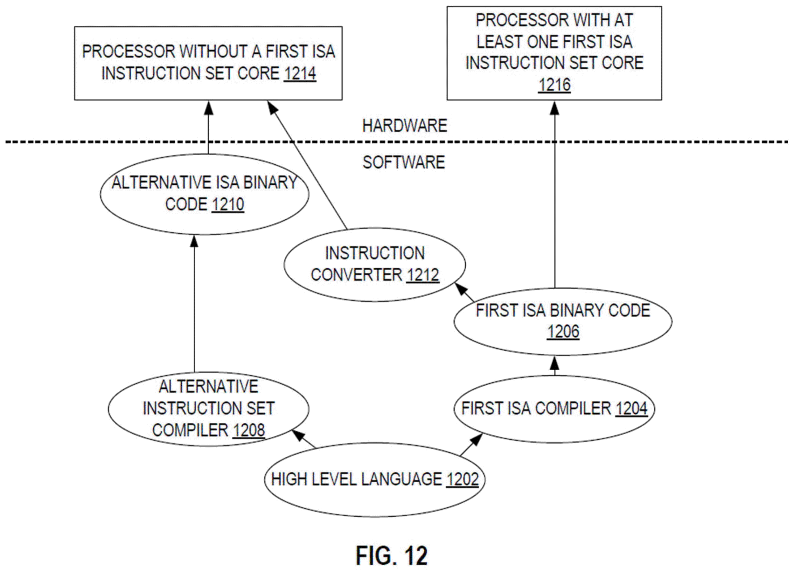

FIG. 12 illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. FIG. 12 shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA a binary code 1206 (e.g., object code) that can, with or without additional linkage processing, be executed on the processor with at least one first ISA instruction set core 1216.

Similarly, FIG. 12 shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

Although the following embodiments are described with reference to specific integrated circuits, such as in computing platforms or processors, other embodiments are applicable to other types of integrated circuits and logic devices. Similar techniques and teachings of embodiments described herein may be applied to other types of circuits or semiconductor devices that may also benefit from better energy efficiency and energy conservation. For example, the disclosed embodiments are not limited to any particular type of computer systems. That is, disclosed embodiments can be used in many different system types, ranging from server computers (e.g., tower, rack, blade, micro-server and so forth), communications systems, storage systems, desktop computers of any configuration, laptop, notebook, and tablet computers (including 2:1 tablets, phablets and so forth), and may be also used in other devices, such as handheld devices, systems on chip (SoCs), and embedded applications. Some examples of handheld devices include cellular phones such as smartphones, Internet protocol devices, digital cameras, personal digital assistants (PDAs), and handheld PCs. Embedded applications may typically include a microcontroller, a digital signal processor (DSP), network computers (NetPC), set-top boxes, network hubs, wide area network (WAN) switches, wearable devices, or any other system that can perform the functions and operations taught below. More so, embodiments may be implemented in mobile terminals having standard voice functionality such as mobile phones, smartphones and phablets, and/or in non-mobile terminals without a standard wireless voice function communication capability, such as many wearables, tablets, notebooks, desktops, micro-servers, servers and so forth. Moreover, the apparatuses, methods, and systems described herein are not limited to physical computing devices, but may also relate to software optimizations.

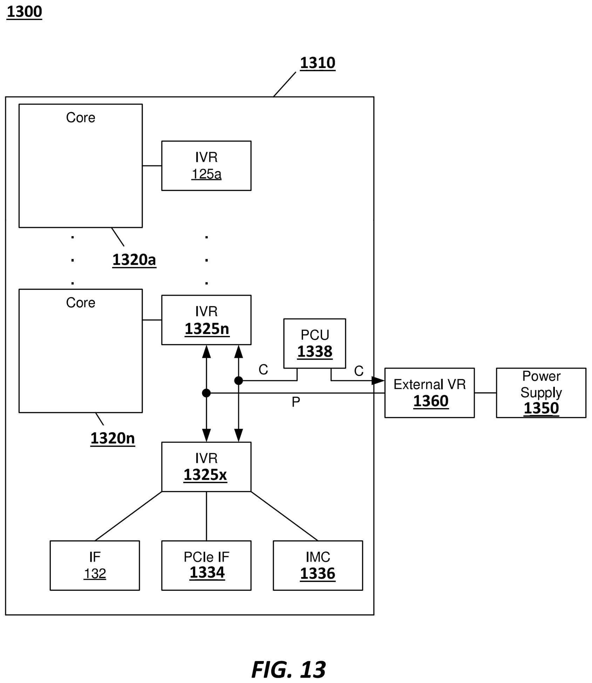

Referring now to Figure 13, shown is a block diagram of a portion of a system in accordance with an embodiment of the present invention. As shown in Figure 13, system 1300 may include various components, including a processor 1310 which as shown is a multicore processor. Processor 1310 may be coupled to a power supply 1350 via an external voltage regulator 1360, which may perform a first voltage conversion to provide a primary regulated voltage to processor 1310.

As seen, processor 1310 may be a single die processor including multiple cores 1320 a-1320 n. In addition, each core may be associated with an integrated voltage regulator (IVR) 1325 a-1325 n which receives the primary regulated voltage and generates an operating voltage to be provided to one or more agents of the processor associated with the IVR. Accordingly, an IVR implementation may be provided to allow for fine-grained control of voltage and thus power and performance of each individual core. As such, each core can operate at an independent voltage and frequency, enabling great flexibility and affording wide opportunities for balancing power consumption with performance. In some embodiments, the use of multiple IVRs enables the grouping of components into separate power planes, such that power is regulated and supplied by the IVR to only those components in the group. During power management, a given power plane of one IVR may be powered down or off when the processor is placed into a certain low power state, while another power plane of another IVR remains active, or fully powered.

Still referring to Figure 13, additional components may be present within the processor including an input/output interface 1332, another interface 1334, and an integrated memory controller 1336. As seen, each of these components may be powered by another integrated voltage regulator 1325 x. In one embodiment, interface 1332 may be enable operation for an Intel^{®} Quick Path Interconnect (QPI) interconnect, which provides for point-to-point (PtP) links in a cache coherent protocol that includes multiple layers including a physical layer, a link layer and a protocol layer. In turn, interface 1334 may communicate via a Peripheral Component Interconnect Express (PCIe^{™}) protocol.

Also shown is a power control unit (PCU) 1338, which may include hardware, software and/or firmware to perform power management operations with regard to processor 1310. As seen, PCU 1338 provides control information to external voltage regulator 1360 via a digital interface to cause the voltage regulator to generate the appropriate regulated voltage. PCU 1338 also provides control information to IVRs 1325 via another digital interface to control the operating voltage generated (or to cause a corresponding IVR to be disabled in a low power mode). In various embodiments, PCU 1338 may include a variety of power management logic units to perform hardware-based power management. Such power management may be wholly processor controlled (e.g., by various processor hardware, and which may be triggered by workload and/or power, thermal or other processor constraints) and/or the power management may be performed responsive to external sources (such as a platform or management power management source or system software).

In embodiments herein, PCU 1338 may be configured to dynamically determine hardware feedback information regarding performance and energy efficiency capabilities of hardware circuits such as cores 1320 and provide an interface to enable communication of this information to an OS scheduler, for use in making better scheduling decisions. To this end, PCU 1338 may be configured to determine and store such information, either internally to PCU 1338 or in another storage of system 1300.

Furthermore, while Figure 13 shows an implementation in which PCU 1338 is a separate processing engine (which may be implemented as a microcontroller), understand that in some cases in addition to or instead of a dedicated power controller, each core may include or be associated with a power control agent to more autonomously control power consumption independently. In some cases a hierarchical power management architecture may be provided, with PCU 1338 in communication with corresponding power management agents associated with each of cores 1320.

While not shown for ease of illustration, understand that additional components may be present within processor 1310 such as uncore logic, and other components such as internal memories, e.g., one or more levels of a cache memory hierarchy and so forth. Furthermore, while shown in the implementation of Figure 13 with an integrated voltage regulator, embodiments are not so limited.

Processors described herein may leverage power management techniques that may be independent of and complementary to an operating system (OS)-based power management (OSPM) mechanism. According to one example OSPM technique, a processor can operate at various performance states or levels, so-called P-states, namely from P0 to PN. In general, the P1 performance state may correspond to the highest guaranteed performance state that can be requested by an OS. In addition to this P1 state, the OS can further request a higher performance state, namely a P0 state. This P0 state may thus be an opportunistic or turbo mode state in which, when power and/or thermal budget is available, processor hardware can configure the processor or at least portions thereof to operate at a higher than guaranteed frequency. In many implementations a processor can include multiple so-called bin frequencies above the P1 guaranteed maximum frequency, exceeding to a maximum peak frequency of the particular processor, as fused or otherwise written into the processor during manufacture. In addition, according to one OSPM mechanism, a processor can operate at various power states or levels. With regard to power states, an OSPM mechanism may specify different power consumption states, generally referred to as C-states, C0, C1 to Cn states. When a core is active, it runs at a C0 state, and when the core is idle it may be placed in a core low power state, also called a core non-zero C-state (e.g., C1-C6 states), with each C-state being at a lower power consumption level (such that C6 is a deeper low power state than C1, and so forth).

Understand that many different types of power management techniques may be used individually or in combination in different embodiments. As representative examples, a power controller may control the processor to be power managed by some form of dynamic voltage frequency scaling (DVFS) in which an operating voltage and/or operating frequency of one or more cores or other processor logic may be dynamically controlled to reduce power consumption in certain situations. In an example, DVFS may be performed using Enhanced Intel SpeedStep^{™} technology available from Intel Corporation, Santa Clara, Calif., to provide optimal performance at a lowest power consumption level. In another example, DVFS may be performed using Intel TurboBoost^{™} technology to enable one or more cores or other compute engines to operate at a higher than guaranteed operating frequency based on conditions (e.g., workload and availability).

Another power management technique that may be used in certain examples is dynamic swapping of workloads between different compute engines. For example, the processor may include asymmetric cores or other processing engines that operate at different power consumption levels, such that in a power constrained situation, one or more workloads can be dynamically switched to execute on a lower power core or other compute engine. Another exemplary power management technique is hardware duty cycling (HDC), which may cause cores and/or other compute engines to be periodically enabled and disabled according to a duty cycle, such that one or more cores may be made inactive during an inactive period of the duty cycle and made active during an active period of the duty cycle.

### Examples of Heterogeneous Architectures

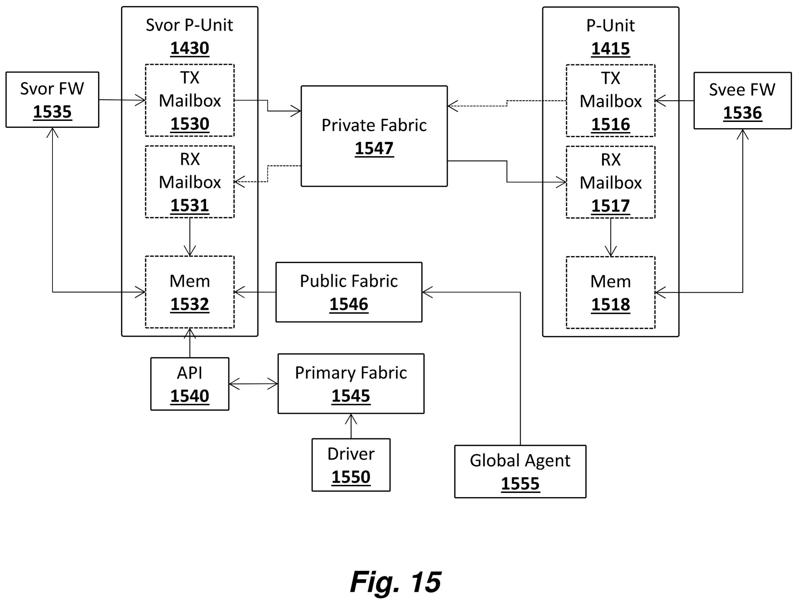

Figure 15 illustrates an example of a processor with a disaggregated architecture comprising an SoC tile 1510, a CPU tile 1515, A GPU tile 1505, and an IO tile 1520 which are integrated on a common base tile 1590 coupled to a package substrate. In some embodiments, each tile comprises a separate die or chip which communicates with other dies/chips over horizontal and/or vertical interconnects (e.g., through-silicon vias). The SoC tile 1510 includes a memory controller to couple the processor to system memory 1550 and provides various other SoC-level functions such as coherent fabric interconnects between the various IP blocks, a display engine, and a low-power IP block which remains operational, even when the processor enters into low power states.

Some embodiments implement a distributed power management architecture comprising a plurality of power management units (P-units) 1530-1533 distributed across the various dies 1505, 1510, 1515, 1520, respectively. In certain implementations, the P-units 1530-1533 are configured as a hierarchical power management subsystem in which a single P-unit (e.g., the P-unit 1530 on the SoC tile 1510 in several examples described herein) operates as a supervisor P-unit which collects and evaluates power management metrics provided from the other P-units 1531-1533 to make package-level power management decisions and determine power/performance states at which each of the tiles and/or individual IP blocks are to operate (e.g., the frequencies and voltages for each of the IP blocks).

The supervisor P-unit 1530 communicates the power/performance states to the other P-units 1531-1533, which implement the power/performance states locally, on each respective tile. In some implementation, the package-wide power management decisions of the supervisor P-unit 1530 include decisions described herein involving core parking and/or core consolidation.

An operating system (OS) and/or other supervisory firmware (FW) or software (SW) 1570 may communicate with the supervisory P-unit 1530 to exchange power management state information and power management requests (e.g., such as the "hints" described herein). The hardware guide unit 1414 and associated tables may be implemented in the supervisor P-unit 1530 and/or the SoC tile 1510. In some implementations described herein, the communication between the OS/supervisory FW/SW 1570 and the P-unit 1530 occurs via a mailbox register or set of mailbox registers. In some embodiments, a Baseboard Management Controller (BMC) or other system controller may exchange power control messages with the supervisory P-unit 1530 via these mailbox registers or a different set of mailbox registers.

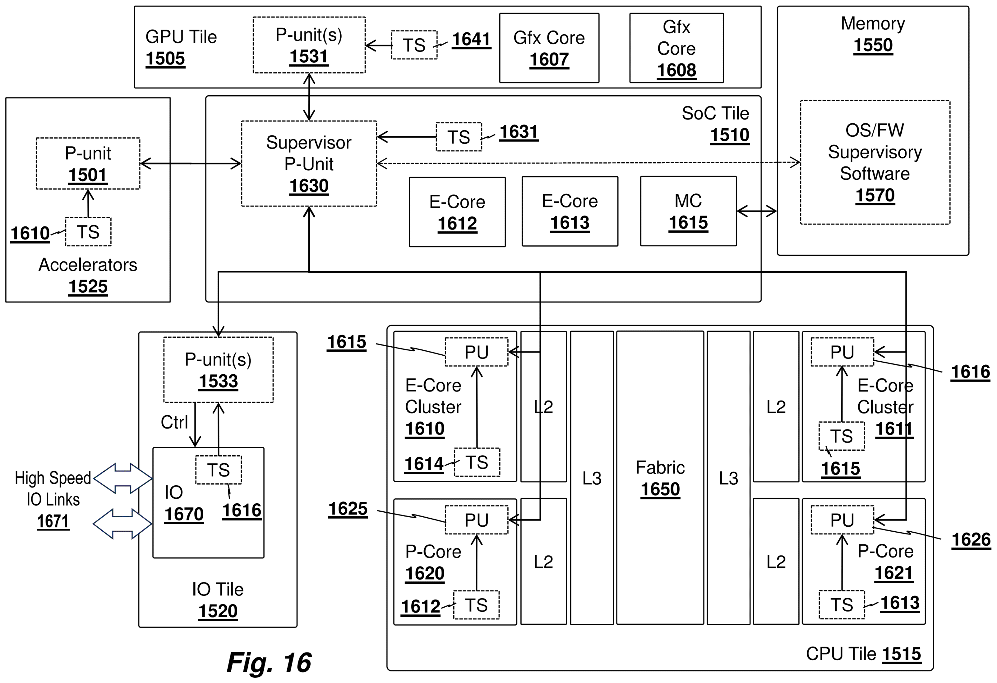

Figure 16 illustrates additional details of one embodiment of a CPU tile 1515, which includes a heterogeneous set of cores including efficiency cores (E-cores) arranged into two E-core clusters 1610-1611 and a plurality of performance cores (P-cores) 1620-1621. Some embodiments of the SoC tile 1510 include a set of E-cores 1612-1613 and a memory controller 1615 to couple the processor to system memory 1550 (e.g., DDR DRAM memory, HBM memory, etc). Similarly, the GPU tile 1505 includes a plurality of graphics cores 1607-1608 which may be managed in the same manner as the P-cores and E-cores as described herein.

The E-cores in the E-core clusters 1610-1611 and the SoC tile 1510 are physically smaller (with multiple E-cores fitting into the physical die space of a P-core), are designed to maximize CPU efficiency, measured as performance-per-watt, and are typically used for scalable, multi-threaded performance. The E-cores work in concert with P-cores 1620-1621 to accelerate tasks which tend to consume a large number of cores. The E-cores are optimized to run background tasks efficiently and, as such, smaller tasks are typically offloaded to E-cores (e.g., handling Discord or antivirus software) - leaving the P-cores 1620-1621 free to drive high performance tasks such as gaming or 3D rendering.

The P-cores 1620-1621 are physically larger, high-performance cores which are tuned for high turbo frequencies and high IPC (instructions per cycle) and are particularly suited to processing heavy single-threaded work. In some embodiments, the P-cores are also capable of hyper-threading (i.e., concurrently running multiple software threads).

In the illustrated embodiment, separate P-units 1615-1616 are associated with each E-core cluster 1610-1611, respectively, to manage power consumption within each respective E-core cluster in response to messages from the supervisor P-unit 1630 and to communicate power usage metrics to the supervisor P-unit 1630. Similarly, separate P-units 1625-1626 are associated with each P-core 1620-1621, respectively, to manage power/performance of the respective P-core in response to the supervisor P-unit 1630 and to collect and communicate power usage metrics to the supervisor P-unit 1630.

In one embodiment, the local P-units 1615-1616, 1625-1626 manage power locally by independently adjusting frequency/voltage levels to each E-core cluster 1610-1611 and P-core 1620-1621, respectively. For example, P-units 1615-1616 control digital linear voltage regulators (DLVRs) and/or fully integrated voltage regulators (FIVRs) to independently manage the frequency/voltage applied to each E-core within the E-core clusters 1610-1611. Similarly, P-units 1625-1626 control another set of DLVRs and/or FIVRs to independently manage the frequency/voltage applied to each P-core 1620-1621. The graphics cores 1607-1608 and/or E-cores 1612-1613 may be similarly controlled via DLVRs/FIVRs. In these implementations, the frequency/voltage associated with a first core may be dynamically adjusted independently - i.e., without affecting the frequencies/ voltages of one or more other cores. The dynamic and independent control of individual E-cores/P-cores provides for processor-wide Dynamic Voltage and Frequency Scaling (DVFS) controlled by the supervisor P-unit 1630.

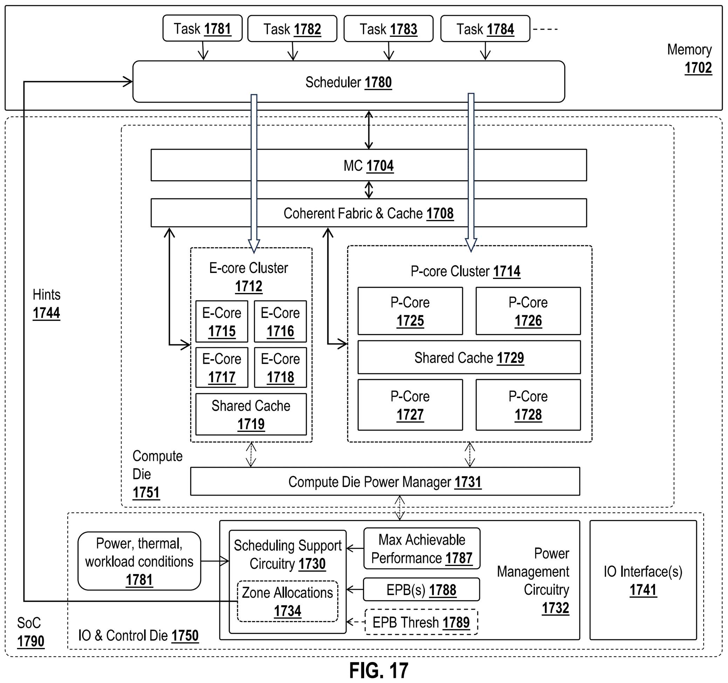

As illustrated in Figure 17, in some implementations, the supervisor P-unit 1630 and other P-units 1615 in the processor communicate via a private fabric 1747. The supervisor P-unit 1630 sends power management messages to other P-units 1615 via a transmit (TX) mailbox 1730 and receives messages from the other P-units via a receive (RX) mailbox 1731. Each of the other P-units (such as P-unit 1615, shown for simplicity) includes a TX mailbox 1716 for transmitting messages and an RX mailbox 1717 for receiving messages.

In some embodiments, the P-units 1630, 1615 include microcontrollers or processors for executing firmware 1735, 1736, respectively, to perform the power management operations described herein. For example, supervisor firmware 1735 executed by supervisor p-unit 1630 specifies operations such as transmission of messages sent to TX mailbox 1630, and over the private fabric 1747 to the RX mailbox 1717 of p-unit 1615. Here, the "mailbox" may refer to a specified register or memory location, or a driver executed in kernel space. Upon receiving the message, RX mailbox 1617 may save the relevant portions of the message to a memory 1718 (e.g., a local memory or a region in system memory), the contents of which are accessible by P-unit 1615 executing its copy of the firmware 1736 (which may be the same as or different from the firmware 1735 executed by the supervisor P-unit 1630).

In response to receiving the message, the P-unit 1615 executing the firmware 1736 confirms reception of the message by sending an Ack message to supervisor 1630 via TX mailbox 1716. The Ack message is communicated to RX mailbox 1731 via fabric 1747 and may be stored in memory 1732 (e.g., a local memory or a region in system memory). The supervisor P-unit 1630 (executing firmware 1735) accesses memory 1732 to read and evaluate pending messages to determine the next course of action.

In various embodiments, supervisor p-unit 1630 is accessible by other system components such as a global agent 1755 (e.g., a platform supervisor agent such as a BMC) via public fabric 1746. In some embodiments, public fabric 1746 and private fabric 1747 are the same fabric. In some embodiments, the supervisor p-unit 1630 is also accessible by software drivers 1750 (e.g., operable within the OS or other supervisory FW/SW 1570) via a primary fabric 1745 and/or application programming interface (API) 1740. In some embodiments, a single fabric is used instead of the three separate fabrics 1745-1747 shown in Figure 17.

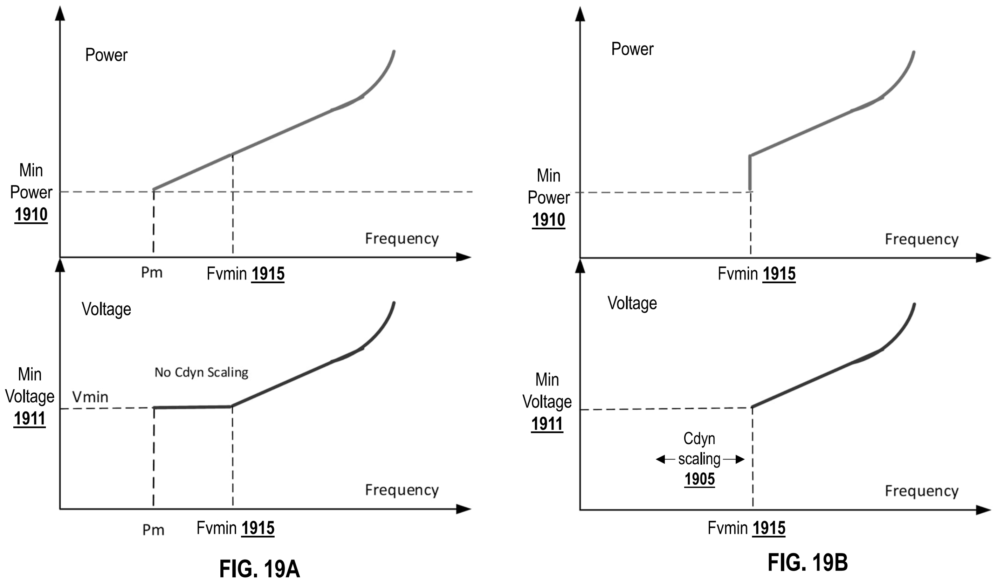

Figure 19 illustrates an example SoC in which temperature sensors 1912-1913 associated with each P-core 1620-1621 and temperature sensors 1914-1915 associated with each E-core cluster 1610-1611, respectively, report temperature measurements to a corresponding local P-unit 1625-1626, 1615-1616. The local P-units 1625-1626, 1615-1616 may dynamically adjust local power consumption based on the temperature measurements and/or pass the temperature measurements to a supervisor P-unit 1630 (previously described with respect to Figure 16) which makes package-wide power management decisions based, at least in part, on the temperature measurements.

Similarly, a temperature sensor 1941 associated with GPU tile 1505 reports temperature readings to local P-unit 1531 and a temperature sensor 1551 associated with the accelerators 1525 reports its temperature readings to local P-unit 1501. Both P-units 1531, 1501 may dynamically adjust local power consumption based on these measurements and/or send the temperature measurements to the supervisor P-unit 1630 for package-wide power management decisions. In the illustrated example, a temperature sensor 1961 on the SoC tile 1510 reports temperature measurements directly to the supervisor P-unit.

It should be noted, however, that the underlying principles of the invention are not limited to a disaggregated architecture or the particular disaggregated architecture illustrated in Figure 19. Moreover, a hierarchical power management subsystem (e.g., with a supervisor P-unit and a plurality of local P-units) is not required for complying with the embodiments of the invention described herein.

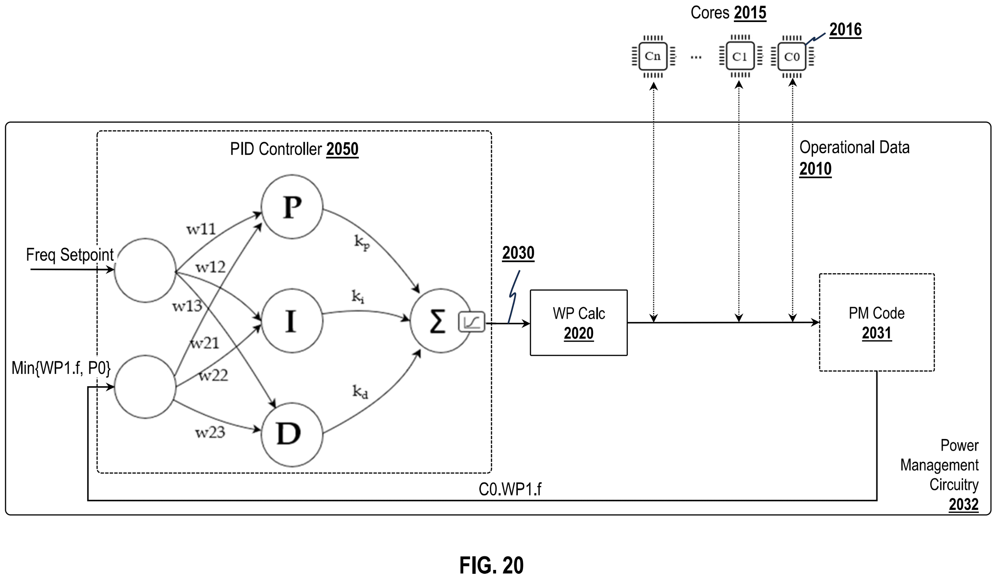

FIG. 20 illustrates an example implementation of an SoC 2090 comprising a compute die 2051 with an efficiency core cluster 2012 comprising a plurality of efficiency cores 2015-2018 and a shared cache 2019, and a performance core cluster 2014 comprising a plurality of performance cores 2025-2028 and a shared cache 2029. An IO & control die 2050 includes input/output (IO) interface circuitry 2041 and power management circuitry 2032 with scheduling support circuitry 2030 for generating scheduling hints 2044 based on current power, thermal, and workload conditions 2081 and current zone allocations 2034 as described herein. The efficiency core cluster 2012 and performance core cluster 2014 are coupled to a memory 2002 (e.g., a DRAM system memory) via a coherent fabric & cache 2008 (e.g., a last-level cache (LLC)) and memory controller 2004.

The compute die 2051 may be coupled to the IO & control die 2050 via die-to-die interconnects, such as those provided by an Embedded Multi-die Interconnect Bridge (EMIB). While a multi-die implementation is shown in FIG. 20, the underlying principles of the invention may be implemented on a single-die processor or on a multi-die processor with more than two dies.

In some implementations, the power management circuitry 2032 on the IO & control die 2050 is a supervisor power manager (e.g., such as supervisor P-unit 1630 described above). The power management circuitry 2032 makes SoC-wide power management decisions based, at least in part, on information provided by a compute die power manager 2031, which performs local power management for the compute die 2051.

As mentioned, the scheduling support circuitry 2030 communicates with a scheduler 2080 which schedules a plurality of tasks 2081-2084 on the efficiency core cluster 2012 and/or the performance core cluster 2014 in accordance with the techniques described herein. In some embodiments, the scheduler 2080 is provided in an operating system or other supervisory software or firmware. Based on current conditions related to power, temperature, and/or characteristics of workloads 2081, the scheduling support hardware 2030 provides hints 2044 (e.g., scheduling recommendations) to the scheduler 2080 related to task placement on the performance cluster 2012 and the efficiency cluster 2014. While the scheduling support circuitry 2030 is shown as integral to the power management circuitry 2032, the scheduling support circuitry 2030 and power management circuitry 2032 may be separate but interconnected circuit blocks on the IO & control die 2050.

In some implementations, the power management circuitry 2032 determines a maximum achievable performance requirement 2087 based on the specified EPB value(s) 2088, which may be stored in a control register such as an MSR. When the efficiency cluster 2012 is capable of meeting the maximum achievable performance requirement 2087 based on the energy/performance bias value(s) 2088, the power management circuitry 2032 assigns the efficiency core cluster 2012 to the performance zone instead of the performance core cluster 2014. The scheduling support circuitry 2030 or the power management circuitry 2032 generate the corresponding zone allocations 2034 which map the efficiency core cluster 2012 and performance core cluster 2014 to different zones based on current energy/performance bias value(s) 2088 and the corresponding maximum achievable performance requirement 2087 (e.g., as indicated in one or more MSRs).

By way of example, and not limitation, the zones may include a performance zone for performance-oriented tasks, an efficiency zone for efficiency-oriented tasks, and a multithreading zone for multithreaded tasks. The scheduling support circuitry 2030 or power management circuitry 2032 may map either the efficiency cluster 2012 or the performance cluster 2014 to the performance zone based on the current efficiency/performance bias value(s) 2088 and/or the maximum achievable performance 2087. In one particular implementation, the efficiency cluster 2012 is mapped to the efficiency zone and the performance cluster 2014 is mapped to the multithreading zone regardless of the efficiency/performance bias value(s) 2088. In other embodiments, however, the mapping of clusters to zones is dynamic, allowing any cluster to be mapped to any defined zone.

In some implementations, the EPB value 2088 is based on a normalized sliding scale (e.g., between 0-15), where relatively larger values indicate a bias towards energy and relatively lower values indicate a bias towards performance. In some embodiments, an EPB threshold 2089 is indicated in a control register, such as another MSR. An EPB value 2088 greater than or equal to the threshold value is considered biased towards energy and an EPB value less than the threshold is considered biased towards performance. The mapping between clusters and zones is then performed accordingly (e.g., as indicated in Table 6).

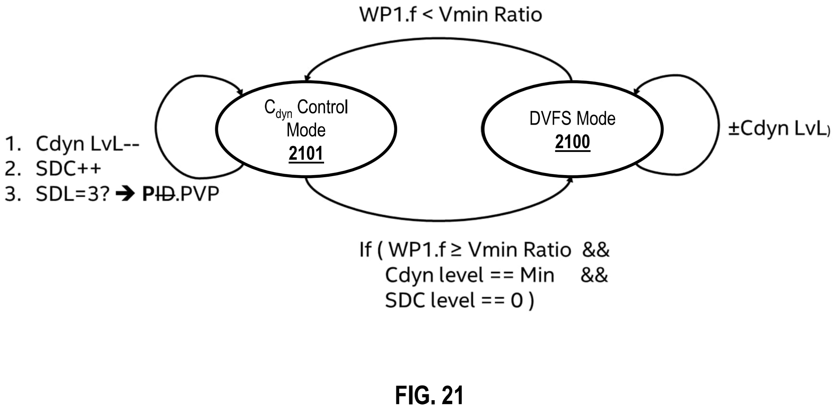

The techniques described herein may be applied to SoC architectures with more than two types of compute clusters. In FIG. 21, for example, an accelerator cluster 2020 comprising a set of accelerator cores 2035-2038 and cache 2039 is integrated in the compute die 2051. The accelerator cores 2035-2038 may be graphics cores, neural processing unit (NPU) cores (e.g., for performing machine-learning operations such as matrix multiplications), tensor processing cores, data compression cores, or any other core types used for acceleration operations.

In these implementations, the accelerator cluster 2020 may be mapped to a particular zone based, at least in part, on the EPB value(s) 2088 and/or the maximum achievable performance 2087. For example, with an EPB value indicating a preference for performance, the accelerator cluster 2020 may be mapped to the performance zone and/or the multithreading zone. In some embodiments, another zone is defined, such as a second performance zone or an acceleration zone, which is enabled and mapped to the acceleration cluster 2020 for certain types of workloads. As previously described, the scheduling support circuitry 2030 may then communicate the zone allocations 2034 as hints 2044 to the scheduler 2080 which responsively schedules tasks 2081-2084 in accordance with the zone allocations 2034.

As mentioned, recent processor generations with larger core counts often need to operate under reduced or similar thermal design power (TDP) specifications relative to earlier generations. Power control processes such as those which operate based on the running average power limit (RAPL), power limit 1 (PL1), power limit 2 (PL2), and others, maintain a processor's average power consumption below a specified TDP by regulating voltages and frequencies for one or more processor components, such as cores and uncores. For example, as power increases, the RAPL control loop reduces one or more processor component frequencies to maintain an average power consumption within the TDP limit. However, the need to operate at lower power levels can reduce a processor's ability to reliably achieve the guaranteed frequency and can, in extreme cases, cause the processor to fall below the manufacturing specifications.

To mitigate this problem, embodiments enable operation at a guaranteed minimum frequency by managing dynamic capacitance (C_{dyn}) such that power consumption for typically high C_{dyn} applications that run at or near the P1 frequency (also referred to as the guaranteed maximum frequency) is reduced and applications associated with lower C_{dyn} values run unthrottled with no performance impact.

The dynamic capacitance, C_{dyn}, of a circuit block such as a core is workload-dependent and can be correlated to instructions per cycle (IPC) using equations which factor in the electrical characteristics of the various cores of the SoC. In general, the average power consumption of an active processor core can be determined using: *P_{core} = C_{dyn} * V²* * *f*, where V and f represent the respective operational voltage and frequency of a corresponding core.

To overcome the above described limitations, embodiments regulate power using C_{dyn} control while maintaining frequency at the Vₘᵢₙ frequency (fvₘᵢₙ) (e.g., the frequency corresponding to a minimum defined voltage or a user-defined frequency specified via an MSR). These embodiments perform frequency and voltage scaling until fvₘᵢₙ is reached and thereafter implement intelligent C_{dyn} control (also referred to herein as intelligent throttling (INTRO)) in the cores to reduce power. Because the frequency will never fall off below fVₘᵢₙ, these embodiments resolve the negative impacts on base frequencies (P1 frequencies) and the deficient binning yields described above.

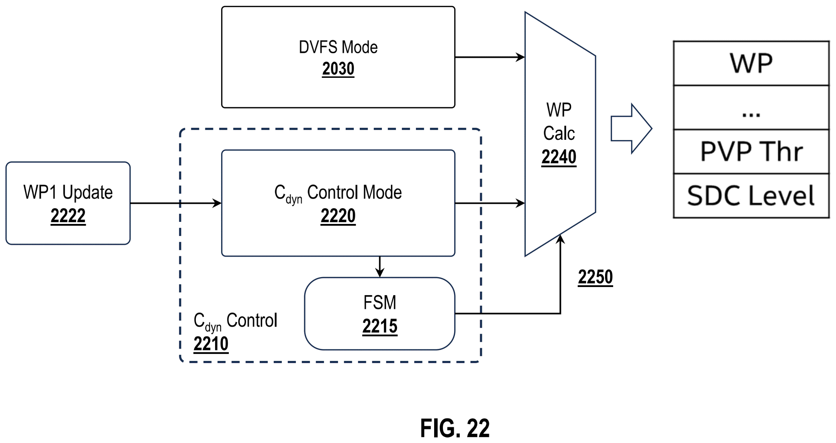

FIG. 22A illustrates a plot of power and voltage levels corresponding to frequencies for implementations with no C_{dyn} scaling and FIG. 22B illustrates power and voltage levels at the same frequencies with C_{dyn} scaling 2205 in accordance with embodiments of the invention. The specified minimum power level 2210 and minimum voltage level 2211 are indicated in FIGS. 22A-B with corresponding dotted horizontal lines.

In accordance with some implementations, dynamic voltage and frequency scaling (DVFS) is used to reduce power until the frequency reaches fvmin 2215. This effectively reduces power as V² dominates in this region (i.e., in accordance with *P_{core} = C_{dyn}* * *V*² * *f*). At this point, the frequency of the corresponding core is maintained at fvmin 2215 and the core dynamic capacitance C_{dyn} is scaled down to reduce power.

Below fvmin, the C_{dyn}-frequency tradeoff is 1:1 as the voltage is flat. In these implementations, C_{dyn} is modified instead of frequency, first using the C_{dyn} reduction techniques predicted to be the most efficient (e.g., having a -1:1 IPC:C_{dyn} tradeoff) followed by more aggressive C_{dyn} reduction techniques if necessary. The most efficient C_{dyn} reduction techniques are predicted using smart C_{dyn} control associated with the core (e.g., configured, at least in part, in view of manufacturability criteria as described herein). In accordance with these implementations, losing some performance is acceptable for high C_{dyn} applications as long as the rest of the lower C_{dyn} applications (which represent the bulk of general purpose applications) run unthrottled. These implementations guarantee deterministic core operating points at frequencies greater than or equal to fvmin, while ensuring appropriate power reduction for TDP-limited scenarios.

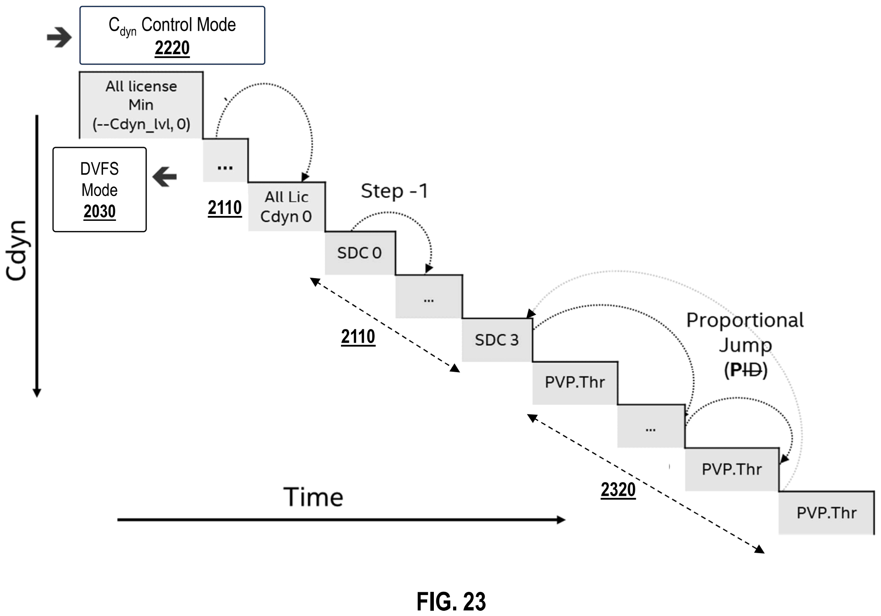

FIG. 23 illustrates an example embodiment comprising a plurality of cores 2315 on which smart C_{dyn} control is implemented as described herein. Power management code 2331 executed on power management circuitry 2332 collects power-related operational data 2310 from the processor cores 2315, including electrical current (I) data collected by current sensing circuitry associated with each core. The various cores 2315 and/or the power management circuitry 2332 may be configured in accordance with smart C_{dyn} control mechanisms described herein. By way of example, and not limitation, the C_{dyn} control mechanisms can include throttling of speculation depth control (SDC), branch prediction aggressiveness, prefetcher aggressiveness, greedy allocation/retirement, power virus protection (PVP), and uop processing. Note, however, that the underlying principles of the invention are not limited to any particular throttling schemes for smart C_{dyn} control.

In some embodiments, the most efficient throttling technique or combination of throttling techniques are determined for providing the best IPC:C_{dyn} tradeoff. The most efficient throttling technique or combination may be determined by testing different throttling schemes for different cores (and/or other circuit blocks) using different types of workloads. The determination of the most efficient throttling technique(s) may be made through testing and/or dynamically during runtime (e.g., using feedback to continually evaluate the efficiency of each throttling technique for a given core or other circuit block).

In the illustrated example, core C0 2316 receives a running average power limit (RAPL) frequency limit from the power management circuitry 2332. In some implementations, the RAPL frequency limit is stored in one or more control registers of the power management circuitry 2332 (e.g., a particular work point WP register, such as the WP1 register in this example). The power management circuitry 2332 implements DVFS to meet the target frequency until it reaches fvmin 2315. In response to frequency dropping below fvmin 2315, then the core (or other circuit block) engages the smart C_{dyn} control mechanisms described herein to reduce power while maintaining the frequency at or above fvmin 2315.

In some embodiments, the smart C_{dyn} control is implemented with a periodic Proportional-Integral-Derivative (PID) controller 2350 that lowers the C_{dyn} by engaging one or more throttling techniques selected based on the most efficient IPC:C_{dyn} tradeoff. The PID controller 2350 may include a state machine and may be implemented in hardware, software/firmware, or any combination thereof.

In some embodiments, the PID controller 2350 is configured with a frequency setpoint of fvmin and a PID feedback channel comprising the RAPL-enforced frequency output from the operational power management code 2331 (e.g., P-code, A-code, etc.). In the illustrated example, the RAPL-enforced frequency is indicated by C0.WP1.f (i.e., indicating the workpoint 1 frequency for core 0). The output 2330 of the periodic PID controller 2350 is input to a work point calculation circuit 2320, which responsively determines the current work point and corresponding operational frequencies for the cores 2315. Thus, in the illustrated example, as the power used by core C0 is reduced via C_{dyn} control, the RAPL feedback loop should recover. When the RAPL limit is equal to fvmin, this means the C_{dyn} of the core has been set to the correct limit.

When C_{dyn} control is initiated, one of the throttling schemes includes controlling the speculation rate of uops (e.g., aggressiveness of branching depth) rather than forcing a stop on uop execution. Here, "more aggressive" means less speculation which lead to lower C_{dyn} (i.e., lower IPC). Additionally (or alternatively), branch prediction speculation may be reduced until meeting the C_{dyn} (frequency) target. If the C_{dyn} target is still not reached, throttling may be forced on uop execution as needed to reach the C_{dyn} target. Other throttling schemes like greedy retirement/allocation or dynamic width control can also be applied to efficiently reduce C_{dyn}.

In some embodiments, the C_{dyn} reduction target is used to dynamically set the aggressiveness of the configuration and a core C_{dyn} threshold is used to enforce the maximum allowable C_{dyn} of the core (e.g., by adjusting the core execution pace using PID control as described herein). Mechanisms such as branch speculation control and dynamic width control recovers IPC losses by efficiently reducing C_{dyn}. When workpoint calculation is activated, a particular type of C_{dyn} enforcement is selected (e.g., DVFS-based within a non-linear zone of the voltage-frequency (VF) curve or INTRO mode using a linear zone of the VF curve below Fₘᵢₙ).

In some embodiments, the output 2330 of the periodic PID controller 2350 is a PVP threshold value, which is tuned by the work point calculator 2320 to limit core C_{dyn} to meet the WP1 frequency. The maximum C_{dyn} threshold may be enforced by throttling the IPC, for example, by increasing aggressiveness of speculation depth control and using proportional-only control by the PID controller 2350.

In accordance with some embodiments, C_{dyn} control is performed in accordance with the following operations. When the workpoint frequency, WP1.f, is less than the minimum frequency value, then C_{dyn} should be reduced. Thus, instruction processing (e.g., IPC) is limited as described herein. When WP1.f is greater than the minimum frequency value, then C_{dyn} can be increased. Thus, limitations on instruction processing are released. When WP1.f = minimum frequency value, this is the converged point at which the C_{dyn} matches the core budget.

In some embodiments, one or more fuses or other persistent on-chip storage are set to define the minFreq (e.g., to be shared by all licenses to the processor) to reflect the transition point between linear and non-linear zones of the VF curve. Table 8 shows an example fuse definition for IA_VMIN_RATIO, which encodes 7 bits to indicate the minimum frequency defined by product to run under normal operational modes.

**Table 8**

| Fuse Name | Location | Bits | Description | Default Value | Format | Units |
|---|---|---|---|---|---|---|
| IA_VMIN_RATIO | ACODE | 7 | Minimal frequency defined by product to run in regular mode (should be above MIN_RATIO throttle/functional point) | 0x4 | U7.0 | 100Mhz steps |

Some embodiments also provide support for software/firmware configuration settings to make changes to the persistent definitions. For example, one or more MSR registers or other control registers may be updated via the Topology Aware Register and PM Capsule Interface (TPMI) to set the minimum guaranteed frequency (e.g., to a different value from what is persistently indicated via the one or more fuses).

As mentioned, smart Cdyn control/intelligent throttling (INTRO) as described herein may be implemented, at least partly, in power management code 2331 (e.g., in P-code, A-code, or combinations thereof). The PM code 2331 may reduce the C_{dyn} or frequency on every round of WP1 updates. In one particular embodiment, P-code performs the WP1 updates and A-code responsively reduces the C_{dyn} or frequency. If the WP1.frequency is less than the Fvmin threshold, aggressive C_{dyn} may be initiated. A subsequent evaluation can then determine if the WP1.Frequency is still below the VMIN_RATIO fuse. The PM code 2331 (e.g., P-code) evaluates the RAPL budget periodically on a slow loop and adjusts the WP1.Frequency accordingly. For example, if the power rises above the RAPL threshold, then the PM code 2331 lowers the WP1.Frequency. If power is below the RAPL threshold, the PM code 2331 increases the WP1.Frequency.

When the frequency has a linear impact on power based on the VF curve (i.e., where voltage is flat), reductions in the speculation aggressiveness will gain more performance than frequency reduction. By way of example, and not limitation, Table 9 shows data collected from one implementation shows the impact of speculative depth control on IPC and C_{dyn} on SPEC CPU 2017 benchmark workload (Spec17 GCC8):

**Table 9**

| ISPEC17_gcc8 Server ST | Threshold | IPC | C_{dyn} | Allocate | IPS (1:3) | IPS (1:1) |
|---|---|---|---|---|---|---|
| Most Conservative (00) | 5 | 0.06% | -0.62% | -0.9% | 0.27% | 0.7% |
| | 10 | 0.05% | -1.10% | -1.7% | 0.42% | 1.2% |
| | 15 | 0.12% | -1.57% | -2.8% | 0.65% | 1.7% |
| | 20 | -0.08% | -2.19% | -4.0% | 0.65% | 2.1% |
| Conservative (01) | 25 | 0.03% | -2.67% | -5.1% | 0.92% | 2.7% |
| | 30 | -0.27% | -3.35% | -6.3% | 0.85% | 3.1% |
| | 35 | -0.30% | -3.94% | -7.6% | 1.01% | 3.6% |
| | 40 | -0.64% | -4.75% | -9.0% | 0.95% | 4.1% |
| Aggressive (10) | 45 | -0.71% | -5.39% | -10.2% | 1.08% | 4.7% |
| | 50 | -1.24% | -6.29% | -11.6% | 0.86% | 5.1% |
| | 55 | -1.58% | -7.07% | -12.9% | 0.78% | 5.5% |
| | 60 | -2.23% | -7.89% | -13.8% | 0.40% | 5.7% |
| Most Aggressive (11) | 70 | -4.68% | -10.91% | -17.7% | -1.04% | 6.2% |
| | 80 | -7.35% | -13.71% | -20.5% | -2.78% | 6.4% |
| | 90 | -9.81% | -15.99% | -22.3% | -4.48% | 6.2% |
| | 100 | -11.66% | -17.41% | -23.3% | -5.85% | 5.8% |

Thus, smart C_{dyn} control based on speculation depth provides greater C_{dyn} reduction than IPC, resulting in improved instructions per second (IPS) at the Fvmin frequency 2215. The IPC:C_{dyn} Impact will be different for different throttling schemes but will result in significant yield improvement at manufacture. The performance loss, if any, will be limited to only high C_{dyn} workloads that operate near the P1n frequency (i.e., n cores operating at P1). All other workloads will run unthrottled.

When frequency is limited by the Vmin ratio (Fmin), speculative aggressiveness may be decreased (e.g., via core management firmware) to reduce the gap between the power budget and current core power. Subsequently, if the frequency is still below the minimum frequency, then the execution of uops may be throttled to lower the C_{dyn} to the appropriate level. When frequency is limited by Vmin ratio (Fmin) it will enter C_{dyn} control mode/INTRO mode. In some embodiments, this means reducing or increasing the C_{dyn} and waiting for the WP1 feedback signal before the next step.

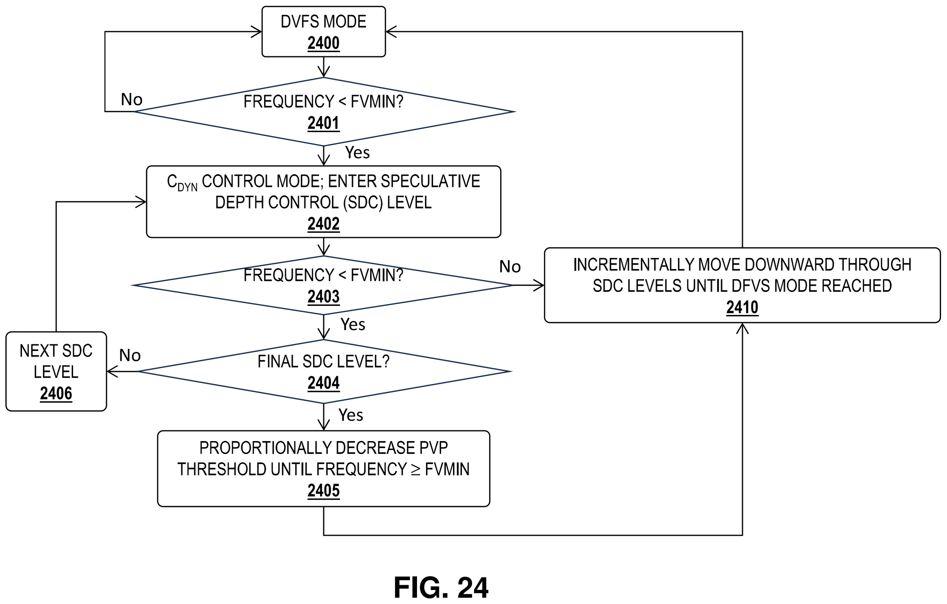

FIG. 24 illustrates transitions between a C_{dyn} control mode 2401 which performs intelligent Cdyn control as described herein and a DVFS mode 2400 (also referred to as power virus control (PVC) mode) which performs dynamic adjustments to core frequency and voltage to reduce power consumption. A transition from DVFS mode 2400 to C_{dyn} control mode 2401 occurs when the workpoint 1 (WP1) frequency drops below a defined Vmin Ratio (i.e., below Fvmin 2215).

In C_{dyn} control mode 2401, speculative depth control (SDC) is initiated at level 0 (L0). If the WP1 frequency remains at or below the Vmin Ratio at SDC L0, then the SDC level is raised incrementally, resulting in more aggressive speculative depth control (i.e., less speculation). If the highest SDC level is reached (SDL=3 in the example) and the WP1 frequency remains at or below the Vmin Ratio, then proportional reductions to the PVP threshold are performed.

When the WP1 frequency rises above the Vmin ratio, a transition can be made back to the DVFS mode 2400 if the C_{dyn} level and SDC levels are minimized. While in DVFS mode, the Cdyn levels may be increased or decreased as described herein. In some embodiments, while WP1.f is less than the Vmin_Ratio (e.g., Fvmin 2215), then power management code (e.g., Acode, Pcode, etc) continues to degrade the C_{dyn} level until it reaches a minimum defined value. Otherwise, it will increase the C_{dyn} level to a defined maximum and then move to regular PVP/DVFS mode. If WP1.f is less than Vmin_Ratio at Cdyn level 0, then the power management code will incrementally increase the SDC level (incrementally reducing speculative operations) until it reaches its maximum level. Otherwise (e.g., if WP1.f reaches Vmin_Ratio), it will incrementally decrease the SDC level until reaching the lowest level and then moves to the C_{dyn} level knob (i.e., and entering DVFS mode 2330). If WP1.f is less than the Vmin_Ratio at the maximum SDC level (e.g., Cdyn level 0/SDC level 3), then power management code will begin decreasing the PVP threshold proportionally by $\left(\frac{wp 1 . f}{Vmin Ration}\right) % ∗ PVP _ thr$ until a -±3% difference is reached. Otherwise, it will increase the threshold proportionally by $\left(\frac{wp 1 . f}{Vmin Ration}\right) % ∗ PVP _ Thr$ until a -±3% difference is reached. In these embodiments, every action is performed only after a WP1 update.

Thus, transitions from DVFS mode (aka, PVC mode) to C_{dyn} control mode (aka, INTRO mode) (enter) occurs when the WP1 frequency is lower than the Vmin Ratio threshold. The transition from C_{dyn} control mode back to DVFS mode (exit) occurs only after the C_{dyn} control mode incrementally transitions back to the enter state. For example, when at SDC3, the Cdyn control mode transitions back to Cdyn level0: SDC3 → SDC2 → ... SDC0 → Cdyn level0 → DVFS/PVC mode. This is done to avoid oscillations between the two modes.

FIG. 25 illustrates example C_{dyn} control logic 2510 operable in accordance with a finite state machine (FSM) 2515 which performs the various operations described above when in C_{dyn} control mode 2520. The FSM 2515 generates a control signal 2550 to workpoint (WP) calculation circuit 2540 indicating whether to remain in C_{dyn} control mode 2520 or to transition to DVFS mode 2330 in response to a WP1 update 2522. In response, the WP calculation circuit 2540 outputs the next workpoint (WP) as well as other variables described herein such as the PVP threshold (e.g., Fvmin 2215) and the next SDC level.

FIG. 26 illustrates steps representing downward and upward transitions in one embodiment of the C_{dyn} control mode 2520. Starting at step 2610, at the C_{dyn} shared by all licenses, additional steps 2610 may be taken sequentially through the speculation depth control (SDC) levels previously described (i.e., where speculation decreases moving down the steps, from SDC0 to SDC3) when the WP1 frequency is less than Vmin_Ratio. If the WP1 frequency is less than the Vmin_Ratio at SDC3, then the power management code decreases the PVP threshold incrementally, down steps 2620. Movement up the steps can occur at any point at which the WP1 frequency reaches or rises above the Vmin_Ratio - ultimately returning to the DVFS mode 2330.

Table 10 illustrates an example configuration register (CORE_PMA_CR_CONFIG_10) with an enable bit which can be set to enable the intelligent throttling techniques described herein. Table 11 illustrates an example performance limit register (PMSB_PCU_CR_ACP_PERF_LIMIT) with an enable bit that can be set to enable performance limits based on the Vmin ratio (see, e.g., Table 8).

**Table 10**

| CORE_PMA_CR_CONFIG_10 | | | | |
|---|---|---|---|---|
| BIT | Field | | Default | Description |
| 15 | INTELLIGENT_THROTTLE_EN | RW_V | 0 = Dis | Enable Intelligent Throttle feature |

**Table 11**

| PMSB_PCU_CR_ACP_PERF_LIMIT | | | | | |
|---|---|---|---|---|---|
| BIT | Field | CCP | | Default | Description |
| 10 | INTELLIGENT_THROTTLE | | RW_V | 0 | Limited by Vmin Ratio fuse |

Starting from DVFS mode at 2700 (aka PVC mode), if the current workpoint frequency (e.g., WP1) drops below fvmin, determined at 2701, then Cdyn control mode is initialized and one or more speculative depth control (SDC) levels are incrementally entered at 2702. If the frequency does not remain below fvmin, determined at 2703, then speculative depth control operations are incrementally moved downward through SDC levels at 2710 (e.g., ... SDC2 → SDC1 → SDC0), until DFVS mode is reached (2700).

If the frequency remains below fvmin, determined at 2703, and if the final SDC level has been reached (e.g., SDC3), determined at 2704, then the PVP threshold is incrementally decreased at 2705 until the current workpoint frequency is greater than or equal to fvmin. As mentioned, in some embodiments, power management code will start decreasing the PVP threshold proportionally by $\left(\frac{wp 1 . f}{Vmin Ratio}\right) % ∗ PVP _ Thr$ until there is a ~±3% difference. When the current WP frequency reaches fvmin, then the highest SDC level is entered (e.g., SDC3) and the SDC level continues to decrease incrementally at 2710 until the lowest SDC level is reached (e.g., SDC0) at which point DVFS mode is entered at 2700. This assumes that the WP frequency remains below fvmin at each SDC level. If the final SDC level has not been reached at 2704, then at 2706, the next SDC level is entered and the process returns to 2702.

Embodiments of the invention described herein resolve the problems associated with generational P1n degradation in processors, thereby ensuring operation within defined TDP specifications and improving the overall yield at manufacture.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

Embodiments (e.g., of the mechanisms) disclosed herein may be implemented in hardware, software, firmware, or a combination of such implementation approaches. Embodiments of the disclosure may be implemented as computer programs or program code executing on programmable systems comprising at least one processor, a storage system (including volatile and non-volatile memory and/or storage elements), at least one input device, and at least one output device.

Program code may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the disclosure also include non-transitory, tangible machine-readable media containing instructions or containing design data, such as Hardware Description Language (HDL), which defines structures, circuits, apparatuses, processors and/or system features described herein. Such embodiments may also be referred to as program products.

### EXAMPLES

The following are example implementations of different embodiments of the invention.

Example 1. A processor comprising: a plurality of cores; power management circuitry to control power consumption of the plurality of cores in accordance with a first power control mode or a second power control mode, the power management circuitry to enter the second power control mode when a frequency of a core of the plurality of cores has dropped below a specified minimum frequency; the power management circuitry to control power consumption of the core in the first power control mode through regulation of voltages and frequencies of the core; and the power management circuitry to control power consumption in the second power control mode by reducing dynamic capacitance (Cdyn) associated with the core while the frequency of the core is below the specified minimum frequency.

Example 2. The processor of example 1, wherein when in the second power control mode, the power management circuitry is to control instruction processing parameters to reduce the Cdyn associated with the core.

Example 3. The processor of examples 1 or 2, wherein the instruction processing parameters comprise one or more of: speculation control levels, a power virus protection (PVP) threshold, branch prediction aggressiveness levels, prefetcher aggressiveness levels, greedy allocation/retirement operations, and uop processing limits.

Example 4. The processor of any of examples 1-3, wherein each speculation control level is associated with a corresponding maximum speculation rate to be used to reduce the Cdyn associated with the core.

Example 5. The processor of any of examples 1-4, wherein the power management circuitry is to incrementally increase the speculation control level until the core operates at the specified minimum frequency.

Example 6. The processor of any of examples 1-5, wherein the power management circuitry is to incrementally decrease the speculation control level while the core operates at or above the specified minimum frequency.

Example 7. The processor of any of examples 1-6, wherein the power management circuitry is to enter the first power control mode when the core operates at or above the specified minimum frequency in a minimum speculation control level.

Example 8. The processor of any of examples 1-7, wherein the power management circuitry to perform dynamic voltage and frequency scaling (DVFS) in the first control mode to regulate the voltages and frequencies of the core.

Example 9. The processor of any of examples 1-8, wherein the power management circuitry is to incrementally increase the speculation control level until a maximum speculation control level is reached, the power management circuitry to proportionally reduce a power virus protection threshold value until a frequency of the core is equal to or greater than the specified minimum frequency.

Example 10. A machine-readable medium having program code stored thereon which, when executed by power management circuitry, is to cause the power management circuitry to perform operations, comprising: controlling, by the power management circuitry, power consumption of a plurality of cores in accordance with a first power control mode or a second power control mode, wherein the second power control mode is to be entered when a frequency of a core of the plurality of cores has dropped below a specified minimum frequency; regulating voltages and frequencies of the core to control power consumption of the core in the first power control mode; and reducing dynamic capacitance (Cdyn) associated with the core to control power consumption in the second power control mode while the frequency of the core is below the specified minimum frequency.

Example 11. The machine-readable medium of example 10, wherein when in the second power control mode, the power management circuitry, responsive to the program code, is to control instruction processing parameters to reduce the Cdyn associated with the core.

Example 12. The machine-readable medium of examples 10 or 11, wherein the instruction processing parameters comprise one or more of: speculation control levels, a power virus protection (PVP) threshold, branch prediction aggressiveness levels, prefetcher aggressiveness levels, greedy allocation/retirement operations, and uop processing limits.

Example 13. The machine-readable medium of any of examples 10-12, wherein each speculation control level is associated with a corresponding maximum speculation rate to be used to reduce the Cdyn associated with the core.

Example 14. The machine-readable medium of any of examples 10-13, wherein responsive to the program code the power management circuitry is to incrementally increase the speculation control level until the core operates at the specified minimum frequency.

Example 15. The machine-readable medium of any of examples 10-14, wherein responsive to the program code, the power management circuitry is to incrementally decrease the speculation control level while the core operates at or above the specified minimum frequency.

Example 16. The machine-readable medium of any of examples 10-15, wherein responsive to the program code, the power management circuitry is to enter the first power control mode when the core operates at or above the specified minimum frequency in a minimum speculation control level.

Example 17. The machine-readable medium of any of examples 10-16, wherein responsive to the program code, the power management circuitry to perform dynamic voltage and frequency scaling (DVFS) in the first control mode to regulate the voltages and frequencies of the core.

Example 18. The machine-readable medium of any of examples 10-17, wherein responsive to the program code, the power management circuitry is to incrementally increase the speculation control level until a maximum speculation control level is reached, the power management circuitry to proportionally reduce a power virus protection threshold value until a frequency of the core is equal to or greater than the specified minimum frequency.

Example 19. A method, comprising: controlling, by power management circuitry, power consumption of a plurality of cores in accordance with a first power control mode or a second power control mode, wherein the second power control mode is to be entered when a frequency of a core of the plurality of cores has dropped below a specified minimum frequency; regulating voltages and frequencies of the core to control power consumption of the core in the first power control mode; and reducing dynamic capacitance (Cdyn) associated with the core to control power consumption in the second power control mode while the frequency of the core is below the specified minimum frequency.

Example 20. The method of example 19, wherein when in the second power control mode, the power management circuitry is to control instruction processing parameters to reduce the Cdyn associated with the core.

Embodiments of the invention described herein improve performance at the same power level or energy consumption rate as existing implementations or provide for equivalent performance at a reduced power level as existing implementations, thereby improving performance with the same battery life or extending the operational time of the computing device. In one particular implementation, these embodiments improved performance by approximately 60% while maintaining the same power level as existing implementations.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

Embodiments of the invention described herein improve performance at the same power level or energy consumption rate as existing implementations or provide for equivalent performance at a reduced power level as existing implementations, thereby improving performance with the same battery life or extending the operational time of the computing device. In one particular implementation, these embodiments improved performance by approximately 60% while maintaining the same power level as existing implementations.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. A processor comprising:
a plurality of cores;
power management circuitry to control power consumption of the plurality of cores in accordance with a first power control mode or a second power control mode, the power management circuitry to enter the second power control mode when a frequency of a core of the plurality of cores has dropped below a specified minimum frequency;
the power management circuitry to control power consumption of the core in the first power control mode through regulation of voltages and frequencies of the core; and
the power management circuitry to control power consumption of the core in the second power control mode by reducing dynamic capacitance (C_{dyn}) associated with the core.

2. The processor of claim 1, wherein when in the second power control mode, the power management circuitry is to control instruction processing parameters to reduce the C_{dyn} associated with the core.

3. The processor of claim 2, wherein the instruction processing parameters comprise one or more of: speculation control levels, a power virus protection (PVP) threshold, branch prediction aggressiveness levels, prefetcher aggressiveness levels, greedy allocation/retirement operations, and uop processing limits.

4. The processor of claim 3, wherein each speculation control level is associated with a corresponding maximum speculation rate to be used to reduce the C_{dyn} associated with the core.

5. The processor of claim 4, wherein the power management circuitry is to incrementally increase the speculation control level until the core operates at the specified minimum frequency.

6. The processor of claim 5, wherein the power management circuitry is to incrementally decrease the speculation control level while the core operates at or above the specified minimum frequency.

7. The processor of claim 6, wherein the power management circuitry is to enter the first power control mode when the core operates at or above the specified minimum frequency in a minimum speculation control level.

8. The processor of any one of claims 1 to 7, wherein the power management circuitry to perform dynamic voltage and frequency scaling (DVFS) in the first control mode to regulate the voltages and frequencies of the core.

9. The processor of any one of claims 4 to 8, wherein the power management circuitry is to incrementally increase the speculation control level until a maximum speculation control level is reached, the power management circuitry to proportionally reduce a power virus protection threshold value until a frequency of the core is equal to or greater than the specified minimum frequency.

10. A machine-readable medium having program code stored thereon which, when executed by power management circuitry, is to cause the power management circuitry to perform operations, comprising:
controlling, by the power management circuitry, power consumption of a plurality of cores in accordance with a first power control mode or a second power control mode, wherein the second power control mode is to be entered when a frequency of a core of the plurality of cores has dropped below a specified minimum frequency;
regulating voltages and frequencies of the core to control power consumption of the core in the first power control mode; and
reducing dynamic capacitance (C_{dyn}) associated with the core to control power consumption in the second power control mode.

11. The machine-readable medium of claim 10, wherein when in the second power control mode, the power management circuitry, responsive to the program code, is to control instruction processing parameters to reduce the C_{dyn} associated with the core.

12. The machine-readable medium of claim 11, wherein the instruction processing parameters comprise one or more of: speculation control levels, a power virus protection (PVP) threshold, branch prediction aggressiveness levels, prefetcher aggressiveness levels, greedy allocation/retirement operations, and uop processing limits.

13. The machine-readable medium of claim 12, wherein each speculation control level is associated with a corresponding maximum speculation rate to be used to reduce the C_{dyn} associated with the core.

14. The machine-readable medium of claim 13, wherein responsive to the program code the power management circuitry is to incrementally increase the speculation control level until the core operates at the specified minimum frequency.

15. The machine-readable medium of claim 14, wherein responsive to the program code, the power management circuitry is to incrementally decrease the speculation control level while the core operates at or above the specified minimum frequency.
